**Europäisches Patentamt**

**European Patent Office**

**Office européen des brevets**

(19)

(11) Veröffentlichungsnummer: **0 261 251**
**B1**

(12)

# EUROPÄISCHE PATENTSCHRIFT

(45) Veröffentlichungstag der Patentschrift:
19.07.89

(21) Anmeldenummer: 86112410.5

(22) Anmeldetag: 08.09.86

(51) Int. Cl.⁴: **B01D 53/18**, F28F 25/08,
F28D 3/00, F28D 5/02

(54) Vorrichtung zum Wärme- und Stofftransport zwischen einer Flüssigkeit und einem Dampf-Gas-Gemisch.

(43) Veröffentlichungstag der Anmeldung:
30.03.88 Patentblatt 88/13

(45) Bekanntmachung des Hinweises auf die Patenterteilung:
19.07.89 Patentblatt 89/29

(84) Benannte Vertragsstaaten:
AT BE CH DE FR GB IT LI LU NL SE

(56) Entgegenhaltungen:
DE-A- 2 527 143
DE-B- 1 289 066
FR-A- 2 459 437
GB-A- 644 976

(73) Patentinhaber: ENERGIAGAZDALKODASI INTEZET, 33,
Bem-rakpart, H-1027 Budapest II(HU)
Patentinhaber: HUNGARIA MUANYAGFELDOLGOZO
VALLALAT, Nagytetenyi ut 216/218, H-1225 Budapest
XXII(HU)

(72) Erfinder: Arató, Emilia, Dipl.-Ing., Zápor u. 16/b.,
H-1034 Budapest(HU)
Erfinder: Harmatha, András, Dr. Dipl.-Ing., Felsö
Zöldmáli 88, H-1025 Budapest(HU)
Erfinder: Palotás, Tibor, Dipl.-Ing., Gerö u. 26.,
H-9700 Szombathely(HU)
Erfinder: Szabó, Ede, Dipl.-Ing., Mártirok tere 2,
H-9700 Szombathely(HU)

(74) Vertreter: Patentanwälte Viering & Jentschura,
Steinsdorfstrasse 6, D-8000 München 22(DE)

**Beschreibung**

Die Erfindung betrifft eine Vorrichtung zum Zustandebringen eines intensiven Wärme- und Stofftransportes zwischen einer Flüssigkeit und einem Dampf-Gas-Gemisch. Eine der Grundbedingungen zum Zustandebringen eines intensiven Wärme- und Stofftransportes zwischen Flüssigkeit und Gas, Flüssigkeit und Dampf, eventuell Flüssigkeit und Gas-Dampf-Gemisch ist, daß eine möglichst große Phasengrenzenfläche zwischen den beiden Phasen zustandegebracht wird.

Nach einer möglichen und in der Praxis verbreiteten Methode der Ausbildung dieser großen Phasengrenzenfläche wird die Flüssigkeitsphase in auf einer festen Fläche strömende dünne Flüssigkeitsfilme abgebaut. Die andere Phase berührt den auf Wirkung der Gravitation nach unten strömenden Flüssigkeitsfilm, wobei der entsprechende Transportvorgang auf Wirkung der Treibkraft zwischen den beiden Phasen erfolgt. Diese erwähnte Treibkraft kann ein Temperaturunterschied, ein Konzentrationsunterschied, ein chemischer Affinitätsunterschied oder jedwelche Kombination derselben sein.

Das gemeinsame Merkmal der praktischen Methoden besteht darin, daß die Flüssigkeitsphase erst zu Tropfen oder Flüssigkeitsstrahlen abgebaut, dann die Tropfen bzw. die Flüssigkeitsstrahlen auf entsprechend ausgebildete feste Oberflächen – filmbildende Plattenelemente – gebracht werden, wo der Flüssigkeitsfilm entsteht.

Im Falle von großen Volumenströmen werden aus verschiedenen vertikalen oder schrägen Platten bestehende filmbildende Elemente infolge ihres geringen Druckabfalls verbreitet verwendet. Das am Transportvorgang teilnehmende andere Medium strömt zwischen den Plattenelementen. Diese Lösung hat trotz des einfachen Aufbaus und geringen Druckabfalls mehrere Nachteile. Im Falle von besonders großen Volumenströmen kann die gleichmäßige Flüssigkeitsbelastung an den Plattenelementen nicht sichergestellt werden; daher fällt ein Teil der ausgebildeten Tropfen bzw. Flüssigkeitsstrahlen ohne Berührung der Plattenelemente zwischen diesen Elementen hindurch. Ein weiteres Problem besteht darin, daß infolge der kontaktiven Wirkung der Oberflächenspannung kein stabiler Flüssigkeitsfilm an den Plattenelementen entsteht. Alle drei Wirkungen beeinflussen nachteilig die Geschwindigkeit des Transportvorganges.

Zum Auffangen der frei durchfallenden Tropfen bzw. Flüssigkeitsstrahlen wurden mit verschiedenen Wellungen, Biegungen versehene filmbildende Plattenelemente ausgebildet. Nach der GB-A 644 976 wird vorgeschlagen, den Kopfteil der Platten doppelkeilförmig verdickt auszubilden. Durch Befestigung oder Aneinanderordnung dieser Plattenelemente entstehen vertikale, schräge oder zickzacklinige Kanalsysteme. Diese Plattenelemente fangen die Flüssigkeitstropfen oft wirkungsvoll auf, haben aber in der Regel einen übermäßig großen Druckabfall. Ein weiterer Nachteil der ein Kanalsystem bildenden Plattenelemente besteht darin, daß die beginnende ungleichmäßige Flüssigkeitsbelastung sich nicht ausgleichen kann.

Zur Erhöhung der Stabilität des Flüssigkeitsfilms werden die Plattenelemente häufig mit Falten, Mikrowellungen und Aufrauhungen versehen. Diese Flächenausbildungen funktionieren unter Laborbedingungen einwandfrei, aber in der Massenproduktion sind große Teile der derart ausgebildeten Platten aus herstellungstechnologischen Gründen (infolge Walzen, Pressen entstandene abgerundete Muster usw.) unwirksam.

Das erfindungsgemäß ausgebildete filmbildende Element soll die obigen Nachteile vermeiden.

Die Erfindung betrifft eine Vorrichtung zum Zustandebringen eines intensiven Wärme- und Stofftransportes zwischen einer Flüssigkeit und einem Gas-Dampf-Gemisch, zur Erhöhung der Grenzflächen der beiden Phasen, und weist eine Vielzahl von die Flüssigkeitsphase auf fester Oberfläche in Flüssigkeitsfilme abbauenden filmbildenden Plattenelementen auf, die jeweils aus zwei Teilen bestehen, nämlich einerseits aus einer vertikal oder annähernd vertikal stehenden Platte und andererseits aus einem am oberen Rand der Platte angeschlossenen verdickten Kopfteil.

Das Wesen der Erfindung besteht insbesondere darin, daß von den Grundflächen der erwähnten Platten nahezu senkrecht abstehende, achsensymmetrische und aus der Hauptrichtung des Flüssigkeitsstromes gesehen im wesentlichen keilförmig beginnende und dann nach unten keilförmig vor- oder einspringend oder regelmäßig konvex oder konkav, im Grenzfall durch eine Gerade abgeschlossene Vorsprünge ausgebildet sind, und daß der zur Grundfläche senkrechte Schnitt des Kopfteils aus der Hauptrichtung des Flüssigkeitsstromes gesehen mit einem konstant oder gleichmäßig zunehmend gekrümmten konvexen Bogen beginnt, der sich dann bis zu der Platte keilförmig fortsetzt.

Nach einer vorteilhaften Ausführungsform der erfindungsgemäßen Vorrichtung entspricht die maximale Dicke des Kopfteils nahezu dem Abstand zwischen den Platten.

Nach einer weiteren vorteilhaften Ausführungsform der erfindungsgemäßen Vorrichtung sind die nebeneinander angeordneten Platten abwechselnd in der vertikalen Abmessung des Kopfteils entsprechenden Abständen vertikal gegeneinander versetzt angeordnet.

Nach einer anderen vorteilhaften Ausführungsform der erfindungsgemäßen Vorrichtung ist der an der Platte angeschlossene, keilförmige Teil des Kopfteils geringfügig konvex oder kokav ausgebildet.

Nach einer weiteren vorteilhaften Ausführungsform der erfindungsgemäßen Vorrichtung sind die Platten mit ihren Kopfteilen gemeinsam aus zwei gleichförmigen, aber nur an ihrer einen Seite mit den Vorsprüngen versehenen Teilen zusammengebaut, wobei in diesen aus zwei Teilen zusammengestellten Plattenelementen für die Flüssigkeits- oder Dampfströmung geeignete Kanäle ausgebildet sind.

Nach einer weiteren vorteilhaften Ausführungsform der erfindungsgemäßen Vorrichtung sind die Platten als dünnwandige Hohlkörper ausgebildet.

Die aus der Grundfläche der filmstabilisierenden Platten nahezu senkrecht abstehenden Vorsprünge spalten den strömenden Flüssigkeitsfilm bei entsprechender Ausbildung und der Flüssigkeitsfilm erhält dadurch einen seitlichen Strömungsimpuls. Durch diesen Impuls entsteht am Flüssigkeitsfilm eine sich in "V"-Form nach unten öffnende Wellenfront. Durch die entstehende Wellenfront werden die leicht welligen Filmflächen gebrochen und die Flüssigkeit an der Oberfläche verbreitert. Diese verbreiternde Wirkung ist bei entsprechender Ausbildung größer als die kontraktive Wirkung der Oberflächenspannung. Die von den nebeneinander angeordneten Vorsprüngen beginnenden Wellenfronten stoßen aneinander. In den Auftreffpunkten oder in derer unmittelbaren Nähe ist die nächste Vorsprungsreihe angeordnet.

Die Vorsprünge sind – abhängig von ihrer Ausbildung – auch zum Korrigieren der Ungleichmäßigkeiten der beginnenden Flüssigkeitsteilung geeignet. Es handelt sich nämlich darum, daß bei den künstlich gebildeten Wellenfronten, wenn Wellenfronten mit unterschiedlichem Impuls zusammentreffen, sich der Auftreffpunkt der beiden Wellenfronten gegen die Wellenfront mit dem kleineren Impuls verschiebt. Der Auftreffpunkt fällt also nicht auf die Spitze des nächsten Vorsprungs; deshalb strömt ein Teil des Flüssigkeitsstromes größeren Impulses in den Flüssigkeitsstrom kleineren Impulses über. Der Ausgleich ist dadurch selbstregelnd.

Der Kopfteil am oberen Rand der filmstabilisierenden Platte steht über die Grundfläche der Platte vor und schirmt die dem Strömen der anderen Phase dienenden Kanäle zwischen den Platten teilweise oder vollständig ab. Wegen der Abschirmung können die eventuell frei fallenden Flüssigkeitstropfen bzw. Flüssigkeitsstrahlen kaum oder überhaupt nicht ohne Berührung der Platten durch die Spalte zwischen den Platten hindurchfallen.

Ein weiterer Vorteil der Ausbildung des Kopfteiles besteht darin, daß die auf diesen auftreffenden Flüssigkeitstropfen nicht auf eine vertikale, sondern auf eine schräge bzw. konvexe Fläche fallen; deshalb ist der Stoßimpuls genügend groß und die Flüssigkeitstropfen verteilen sich wesentlich besser an den Platten.

Die Erfindung wird im folgenden anhand von Ausführungsbeispielen näher erläutert, die aus der Zeichnung ersichtlich sind. In der Zeichnung zeigen:

Fig. 1 eine vorteilhafte Ausführungsform der erfindungsgemäßen filmbildenden Vorrichtung in perspektivischer Ansicht,

Fig. 2 bis 6 einige Ausführungsformen der Vorsprünge an den Platten in Voransicht und

Fig. 7 eine weitere vorteilhafte Ausführungsform der erfindungsgemäßen filmbildenden Vorrichtung in perspektivischer Ansicht.

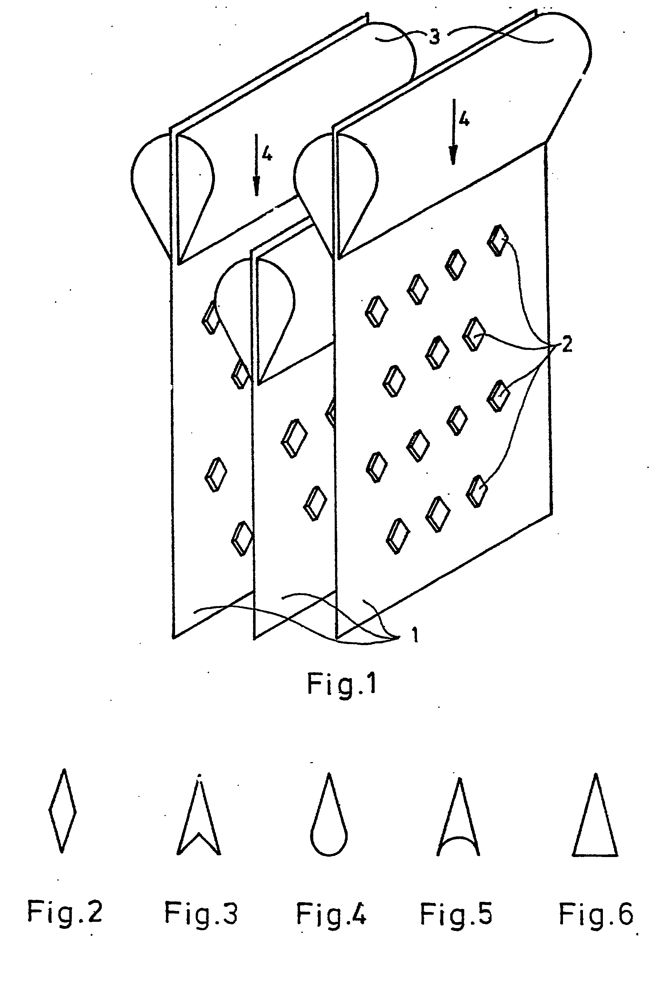

In Fig. 1 ist eine vorteilhafte Ausführungsform der erfindungsgemäßen, aus filmbildenden Plattenelementen bestehenden Vorrichtung schematisch dargestellt. Von einer filmstabilisierenden Platte 1 wird eine derart vertikale ebene, nicht durchbrochende Fläche gebildet, von welcher impulsbildende Vorsprünge 2 nahezu senkrecht abstehen. Am oberen nahezu horizontalen Rand der Platte 1 ist ein Kopfteil 3 angeschlossen. Die Vorsprünge 2 sind aus der Richtung 4 des Flüssigkeitsstromes gesehen achsensymmetrisch und keilförmig; auch ihr unterer Abschlußteil kann in Keilform ausgebildet sein, wodurch die obere Keilform zu einem nach unten vor- oder einspringenden achsensymmetrischen Viereck (siehe Fig. 2 und 3) oder zu einer unten regelmäßig gekrümmten, nach außen konvexen oder konkaven Fläche (siehe Fig. 4 und 5) ergänzt wird. Im Grenzfall kann der untere Abschluß auch eine Gerade (siehe Fig. 6) sein.

Die maximale Breite der erwähnten Vorsprünge 2 hat eine mit der üblichen Teilung der Abmessung der filmbildenden Plattenelemente vergleichbare Größe, ist aber vorzugsweise kleiner, genauer gesagt: ihre horizontale Teilung an der filmstabilisierenden Platte 1 kann sich von anderthalb bis viermal der maximalen Breite erstrecken. Die vertikale Teilung ist durch die Schnittpunkte des durch die Tangenten an die oberen keilförmigen Teile gebildeten Netzes bestimmt bzw. kann davon um 30% nach oben oder unten abweichen.

Der Kopfteil 3 ist ebenfalls achsensymmetrisch ausgebildet und aus der Hauptrichtung 4 des Flüssigkeitsstromes gesehen in seinem zur Grundfläche der filmstabilisierenden Platte 1 senkrechten Schnitt eine zunehmend steiler werdende konvexe Kurve, an welcher sich nach unten ein nahezu keilförmiger Abschlußteil tangential anschließt. Die Querschnittskontur des Abschlußteils kann gerade oder geringfügig konvex oder eventuell konkav sein. Die Querschnittsbreite des Kopfteils 3 ist vorzugsweise gleich dem üblichen Teilungsabstand der Platten bzw. kann geringfügig größer oder kleiner sein.

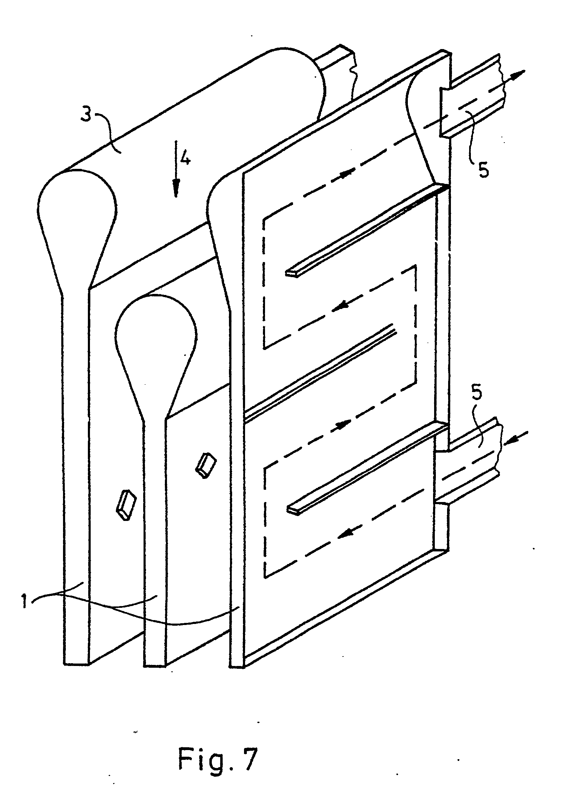

In Fig. 7 ist eine weitere vorteilhafte Ausführungsform des erfindungsgemäßen filmbildenden Plattenelements 1, 3 schematisch dargestellt, welches von der Ausführungsform aus Fig. 1 darin abweicht, daß die Platte aus zwei parallelen Plattenteilen besteht und zwischen den Plattenteilen bzw. im Kopfteil 3 mit Hilfe von Rippen oder dgl. für das Strömen eines dritten Mediums geeignete Kanäle 5 ausgebildet sind. Durch die Kanäle 5 ist das erfindungsgemäße filmbildende Plattenelement für das Zustandebringen von Vermischungs-, Lösungs- bzw. chemischen Vorgängen zwischen Flüssigkeits- und Gas- bzw. Flüssigkeits- und Dampfphasen geeignet. Die Vermischungs- bzw. Reaktionswärme wird durch das in die Kanäle 5 geleitete Medium ab- bzw. zugeleitet. Die im filmbildenden Plattenelement 1 angeordneten Kanäle 5 können von in der Wärmetechnik üblicher, im übrigen beliebiger Anordnung sein (gleich-, gegen-, kreuzströmend oder deren jedwelche Kombination).

Bei den gezeigten Ausführungsformen sind mehrere filmbildende Plattenelemente 1, 3 im Abstand voneinander angeordnet und entsprechend den Fig. 1 und 7 abwechselnd mit ihren Kopfteilen 3 in Vertikalrichtung gegeneinander versetzt.

**Patentansprüche**

1. Vorrichtung zum Zustandebringen eines intensiven Wärme- und Stofftransports zwischen einer Flüssigkeit und einem Gas-Dampf-Gemisch, zur Erhöhung der Grenzflächen der beiden Phasen, mit einer Vielzahl von die Flüssigkeitsphase auf festen Oberflächen in Flüssigkeitsfilme aufteilenden filmbildenden Plattenelementen (1, 3), die jeweils aus zwei Teilen bestehen, nämlich einerseits aus einer vertikal oder nahezu vertikal angeordneten Platte (1) und andererseits aus einem am oberen Rand der Platte (1) angeschlossenen verdickten Kopfteil (3), dadurch gekennzeichnet, daß an den Grundflächen der Platte (1) nahezu senkrecht abstehende achsensymmetrische und aus der Hauptrichtung (4) des Flüssigkeitsstromes gesehen im wesentlichen in Keilform beginnende und dann nach unten keilförmig vor- oder einspringend oder regelmäßig konvex oder konkav gekrümmt oder im Grenzfall durch eine Gerade abgeschlossene Vorsprünge (2) ausgebildet sind, und daß der zur Grundfläche vertikale Schnitt des Kopfteils (3) aus der Hauptrichtung (4) des Flüssigkeitsstromes gesehen mit einem konstant oder gleichmäßig zunehmend gekrümmten konvexen Bogen beginnt, der sich dann bis zu der Platte (1) keilförmig fortsetzt.

2. Vorrichtung nach Anspruch 1, dadurch gekennzeichnet, daß die maximale Dicke des Kopfteils (3) nahezu gleich dem Abstand zwischen den Platten (1) ist.

3. Vorrichtung nach Anspruch 1 oder 2, dadurch gekennzeichnet, daß die nebeneinander angeordneten Platten (1) abwechselnd in der vertikalen Abmessung des Kopfteils (3) entsprechenden Abständen vertikal gegeneinander versetzt sind.

4. Vorrichtung nach einem der Ansprüche 1 bis 3, dadurch gekennzeichnet, daß der an der Platte (1) angeschlossene keilförmige Abschlußteil des Kopfteils (3) geringfügig konvex oder konkav ausgebildet ist.

5. Vorrichtung nach einem der Ansprüche 1 bis 4, dadurch gekennzeichnet, daß die Platten (1) mit ihren Kopfteilen (3) gemeinsam aus zwei gleichförmigen, aber nur an einer Seite mit den Vorsprüngen (2) versehenen Teilen ausgebildet sind und daß in diesen aus zwei Teilen zusammengestellten Plattenelementen (1, 3) für das Strömen von Flüssigkeit oder Dampf geeignete Kanäle (5) ausgebildet sind.

6. Vorrichtung nach einem der Ansprüche 1 bis 5, dadurch gekennzeichnet, daß die Plattenelemente (1, 3) als steife dünnwandige Hohlkörper ausgebildet sind.

## Claims

1. Apparatus for bringing about an intensive heat and mass transport between liquid and a gas-steam-mixture for increasing the interface of the two phases, comprising a plurality of film forming plate elements (1, 3) dividing the liquid phase on solid surfaces in liquid films, said plate elements in each case consisting of two parts, namely on the one hand of a vertically or nearly vertically arranged plate (1) and on the other hand of a thickened head part (3) connected to the upper edge of the plate (1), characterized in that projections (2) symmetrical about an axis are formed to project nearly perpendicularly at the bases of the plate (1), and start, when seen from the main direction (4) of the liquid flow, mainly in wedge shape and are then downwardly terminated in wedge shape projecting or reentering, or regularly convexly or concavely curved or in borderline case by a straight line, and that the section of the head part (3) perpendicular to the base starts, when seen from the main direction (4) of the liquid flow, with a constantly or equally increasing curved convex bow, which continues then to the plate (1) in wedge shaped manner.

2. Apparatus according to claim 1, characterized in that the maximum thickness of the head part (3) is nearly equal to the distance between the plates (1).

3. Apparatus according to claim 1 or 2, characterized in that the plates (1) arranged side by side are alternatingly vertically displaced with respect to each other at distances corresponding to the vertical size of the head part (3).

4. Apparatus according to one of the claims 1 to 3, characterized in that the wedge-shaped termination of the head part (3) connected to the plate (1) is formed slightly convex or concave.

5. Apparatus according to one of the claims 1 to 4, characterized in that the plates (1) together with their head parts (3) are formed from two similar parts provided, however, with projections (2) only at one side, and that in these plate elements (1, 3), assembled from two parts, channels (5) suitable for the flow of liquid or steam are formed.

6. Apparatus according to one of claims 1 to 5, characterized in that the plate elements (1, 3) are formed as stiff, thin-walled hollow bodies.

## Revendications

1. Dispositif de mise en œuvre d'un transfert intensif de chaleur et de matière entre un liquide et un mélange gaz/vapeur, pour l'augmentation de la surface de contact entre les deux phases avec un ensemble d'éléments en forme de plaques (1, 3) pour la formation de films, divisant la phase liquide sur des surfaces fixes sous forme de films liquides, lesdits éléments constitués chacun de deux parties à savoir d'une part d'une plaque (1) disposée de façon verticale ou sensiblement verticale et d'autre part d'une tête (3) épaisse entourant le bord supérieur de la plaque (1), caractérisé en ce que sur la surface de base de la plaque (1) sont formées des saillies (2) séparées, sensiblement verticales, présentant un axe de symétrie et qui, vues dans la direction principale (4) d'écoulement du liquide commencent sensiblement en forme de coin puis, vers le bas sont en forme de coin saillant ou rentrant ou sont courbées régulièrement de façon convexe ou concave, ou se terminant par une partie limite extrême droite, et en que en coupe verticale sur la surface de base, vue selon la direction principale (4) de l'écoulement du liquide, la tête (3) commence par un arc courbe, convexe constant ou croissant régulièrement et qui se prolonge jusqu'à la plaque (1) en forme de coin.

2. Dispositif selon la revendication 1, caractérisé en ce que l'épaisseur maximale de la tête (3) est sensiblement égale à la distance entre plaques (1).

3. Dispositif selon la revendication 1 ou 2, caractérisé en ce que les plaques (1) disposées l'une à côté de l'autre sont décalées alternativement verticalement l'une par rapport à l'autre sur des distances correspondant à la dimension verticale de la tête (3).

4. Dispositif selon l'une des revendications 1 à 3, caractérisé en ce que la partie terminale en forme de coin de la tête (3) et rejoignant la plaque (1) présente une forme légèrement convexe ou concave.

5. Dispositif selon l'une des revendications 1 à 4, caractérisé en ce que les ensembles formés par les plaques (1) et leur tête (3) sont formés de deux parties de même forme mais munies d'un seul côté des saillies (2) et en ce que des canaux (5) aptes à permettre la circulation de fluide ou de vapeur sont formés dans ces éléments en forme de plaques (1, 3) constitués par l'assemblage de deux parties.

6. Dispositif selon l'une des revendications 1 à 5, caractérisé en ce que les éléments en forme de plaques (1, 3) sont constituées par des corps creux rigides et à paroi mince.

Fig.1

Fig.2    Fig.3    Fig.4    Fig.5    Fig.6

Fig. 7